# EUROPEAN PATENT APPLICATION

(11) **EP 4 826 418 A1**
(43) Date of publication of application: **21.10.2026**
(21) Application number: 26172864.6
(22) Date of filing: 16.04.2026
(51) Int. Cl.: G02B 1/18, G02B 27/00

(54) **OPTICAL COMPONENT AND METHOD OF REMOVING ALKALINE EARTH METAL DEPOSITED ON OPTICAL COMPONENT**

(30) Priority: 17.04.2025 JP 2025067902
(71) Applicant: RIKEN, Wako-shi, Saitama 351-0198 (JP); Jeol Ltd., Akishima, Tokyo 196-8558 (JP)
(72) Inventor: KATORI, Hidetoshi, Saitama 351-0198 (JP); TAKAMOTO, Masao, Saitama 351-0198 (JP); TSUJI, Shigenori, Akishima 196-8558 (JP); KOBAYASHI, Tomohiro, Saitama 350-1297 (JP); HATTORI, Shoma, Saitama 350-1297 (JP)
(74) Representative: Boult Wade Tennant LLP

(57) **Abstract**

Provided is an optical component used in an environment in which at least a part of the optical component is in contact with an alkaline earth metal vapor, the optical component including at least a dielectric multilayer coating and an aluminum oxide layer on an optical path, in which an outermost surface on a side in contact with the alkaline earth metal vapor is coated with the aluminum oxide layer. Further provided is a method of removing an alkaline earth metal deposited on an optical component, the method including heating, after the optical component is used in an environment in which at least a part of the optical component is in contact with an alkaline earth metal vapor, the optical component at a heating temperature of 200°C or higher to cause the alkaline earth metal deposited on the optical component to sublime.

## Description

### BACKGROUND

### 1. TECHNICAL FIELD

The present invention relates to an optical component and a method of removing an alkaline earth metal deposited on the optical component.

### 2. RELATED ART

Patent Document 1 discloses that: "By heating a high-temperature bath (116) with a heater (108), atomic gas is generated in the high-temperature bath (116) from an atomic source. A magneto-optical trap is realized by a laser beam (130) reflected by a right-angled conical mirror (102) and a magnetic field formed by a magnetic field generator (112), and the atomic gas is confined by using the magneto-optical trap and cooled. The-cooled atoms are output from an opening (106) to the outside of a slow atom beam generator (100) by a laser beam (132), which is a push laser beam. A slow atomic beam is thereby formed. ( Abstract )". Non-Patent Document 1 describes that "We demonstrate strontium (Sr) atomic vapor cells having a total external volume of 0.63 cm³ that can operate above 300 °C for times exceeding 380 h. The cells are fabricated using micromachined silicon frames anodically bonded to glass windows that have a 20-nm thick protective layer of Al₂O₃ deposited on the interior surfaces. The presence of Sr vapor in the cell is confirmed through laser absorption spectroscopy for the ¹S₀→ ¹P₁ transition in Sr at 461 nm. Measurements of sub-Doppler linewidths indicated negligible (<3 MHz) broadening of this transition from residual background gas collisions. This compact and manufacturable, high-temperature atomic vapor cell can enable narrow-line optical frequency references based on strontium and other alkaline earth species. (opening paragraph)". As shown in Patent Document 1, the mirror is used as an optical component in an optical lattice clock.

### Related Art Documents

### Patent Documents

Patent Document 1: WO 2022/113717

### Non-Patent Documents

Non-Patent Document 1: Jacob M. Pate, John Kitching, AND Matthew T. Hummon, Microfabricated strontium atomic vapor cells, Optics Letters, Vol. 48, No. 2/15 (2023).

### SUMMARY

In a first aspect of the present invention, there is provided an optical component used in an environment in which at least a part of the optical component is exposed to an alkaline earth metal vapor. The optical component includes at least a dielectric multilayer coating and an aluminum oxide layer provided on at least a portion of the optical component located in an optical path. The optical component has an outermost surface on a side exposed to the alkaline earth metal vapor that is coated with the aluminum oxide layer.

In the above, the optical component may have one or more functions of a mirror, a lens, a prism, antireflection, a wave plate, and a polarizer.

In the above, the alkaline earth metal vapor may contain strontium atoms.

In the above, the aluminum oxide layer may have a thickness of 50 to 150 nm.

In the above, the dielectric multilayer coating may be formed by alternately stacking a transparent high refractive index layer and a transparent low refractive index layer having a refractive index lower than that of the high refractive index layer.

In the above, the high refractive index layers may be selected from tantalum oxide (e.g., tantalum pentoxide), titanium oxide (e.g., titanium dioxide), zirconium dioxide, zinc selenide, and hafnium oxide. The low refractive index layers may be selected from silicon dioxide and magnesium fluoride.

In the above, the optical component may include a substrate, and the dielectric multilayer coating may be formed on the substrate.

In the above, the substrate may be an aluminum oxide substrate.

In the above, the optical component may be used in an environment of less than 1 atm.

In the above, the optical component may be used in a high-temperature environment of 200°C or higher.

In a second aspect of the present invention, there is provided a low-velocity atomic beam source including any one of the above optical components as a mirror or a window.

In a third aspect of the present invention, there is provided a method of removing an alkaline earth metal deposited on any one of the above optical components. The method of removing the alkaline earth metal includes heating, after the optical component is used in an environment in which at least a part of the optical component is in contact with an alkaline earth metal vapor, the optical component at a heating temperature of 200°C or higher to cause the alkaline earth metal deposited on the optical component to sublime.

In the above, the heating may be performed in a range of 250 to 500°C.

In the above, a heating time in the heating to be performed may be in a range of 5 to 15 hours.

In a fourth aspect of the present invention, there is provided an alkaline earth metal vapor adhesion prevention method including preventing adhesion of an alkaline earth metal to any one of the above optical components while the optical component is used by using the optical component in an environment of 200°C or higher in which at least a part of the optical component is in contact with an alkaline earth metal vapor.

The summary clause does not necessarily describe all necessary features of the embodiments of the present invention. Also, subcombinations of these feature groups can also be inventions.

### BRIEF DESCRIPTION OF THE DRAWINGS

FIG. 1 illustrates a first example of the optical apparatus 1.
FIG. 2 illustrates the second example of the optical apparatus 1.
FIG. 3 illustrates the third example of the optical apparatus 1.
FIG. 4 illustrates the fourth example of the optical apparatus 1.
FIG. 5 illustrates the fifth example of the optical apparatus 1.
FIG. 6 illustrates an example of a configuration of the optical lattice clock 10.
FIG. 7 is an example of a configuration of the low-velocity atomic beam source 100.
FIG. 8 is an example of the configuration of the low-velocity atomic beam source 100.
FIG. 9 is an example of the configuration of the low-velocity atomic beam source 100.
FIG. 10 schematically illustrates an example of a layer configuration of the optical component 500 according to the present embodiment.
FIG. 11 illustrates an example of the flow of a method of removing an alkaline earth metal deposited on the optical component 500 according to the present embodiment.
FIG. 12 illustrates a comparison of spectral characteristics between the evaluation substrate and a simulation.
FIG. 13 illustrates the change over time in reflectance of the evaluation substrate.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solving means of the invention. In addition, embodiments will be described with reference to the drawings; however, in the description of the drawings, the same reference numerals may be assigned to the same or similar parts, and redundant description may be omitted.

An example of the optical apparatus in which an optical component according to the present embodiment is used will be described.

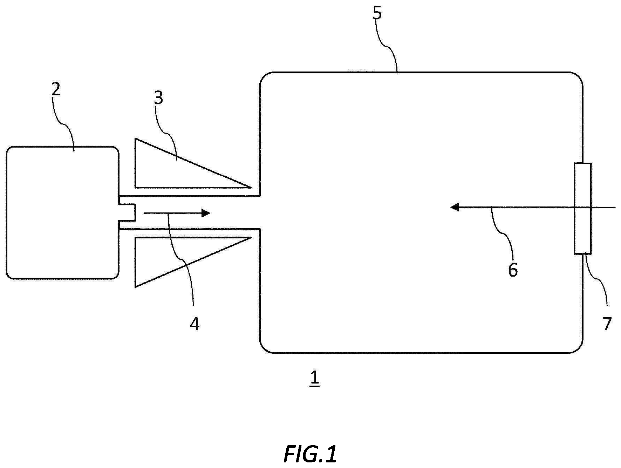

FIG. 1 illustrates the first example of the optical apparatus 1. The optical apparatus 1 in this example is the laser cooling apparatus. The optical apparatus 1 includes, for example, an atomic oven 2, a laser cooling unit 3, the vacuum chamber 5, and an optical component (window) 7.

The atomic oven 2 heats an atomic source. As a result, atoms 4 are emitted from the atomic oven 2 at thermal velocities, for example, on the order of several hundred m/s. Atoms may be, for example, alkaline earth metal atoms such as strontium.

The laser cooling unit 3 cools atoms emitted from the atomic oven 2. For example, in the laser cooling unit 3, the magnetic field gradient and counter propagating laser beam 6 act on atoms 4, a change in Doppler shift associated with deceleration of the atoms is compensated by Zeeman shift, such that the frequency of the laser beam 6 is effectively maintained in resonance with an atomic transition of the atoms 4. As a result, the atoms 4 are decelerated, and cooling is performed.

The vacuum chamber 5 provides a space in which atoms are present and manipulated. The vacuum chamber 5 may be maintained at ultra high vacuum. In the vacuum chamber 5, the optical component (window) 7 is provided, and the laser beam 6 enters through the optical component (window) 7. Here, by use of the optical apparatus 1, atoms (for example, alkaline earth metal atoms such as strontium) collides with an inner side of the optical component (window) 7, and atoms are deposited. As a result, there is a possibility that the optical performance (for example, transmittance) of the optical component (window) 7 deteriorates.

As described later, the optical component (window) 7 may be an example of the optical component in the present embodiment. Accordingly, the optical component (window) 7 can have resistance to the alkaline earth metal vapor such as strontium, and furthermore, it is possible to easily remove the alkaline earth metal atoms. The removal method and the like will be described later.

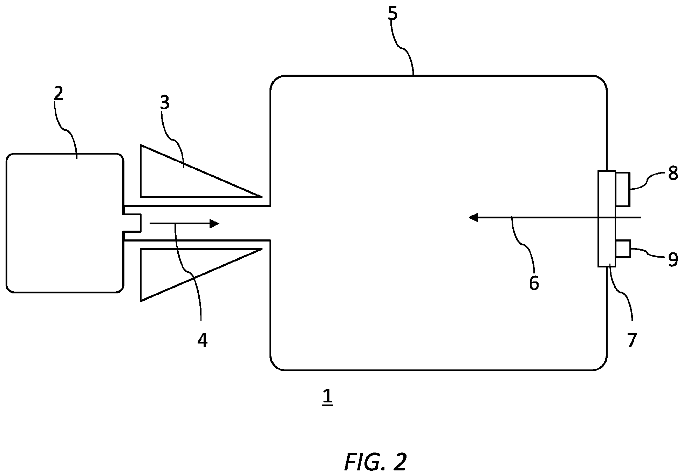

FIG. 2 illustrates the second example of the optical apparatus 1. The optical apparatus 1 of this example further includes the heater 8 and the temperature sensor 9 in addition to the optical apparatus 1 of FIG. 1. As described later, the alkaline earth metal atoms such as strontium in the optical component (window) 7 can be easily removed by using the heater 8 and the like.

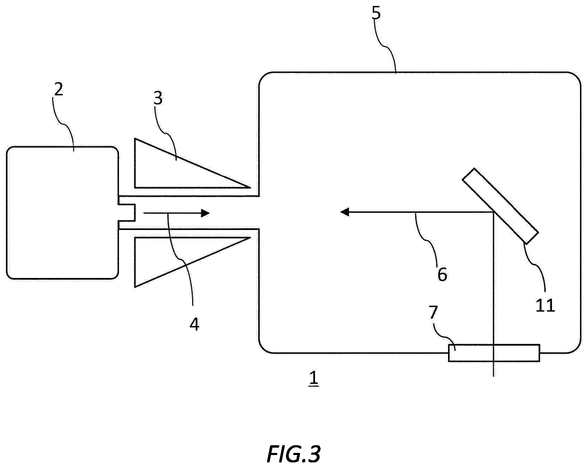

FIG. 3 illustrates the third example of the optical apparatus 1. The optical apparatus 1 of this example further includes the optical component (mirror) 11 in addition to the optical apparatus 1 of FIG. 1. In this example, the laser beam 6 incident from the optical component (window) 7 is reflected by the optical component (mirror) 11 and then irradiated onto atoms 4. As described later, the optical component (window) 7 and/or the optical component (mirror) 11 may be an example of the optical component in the present embodiment.

Also in this example, by use of the optical apparatus 1, the atoms (for example, alkaline earth metal atoms such as strontium) collide with, and are further deposited on, an inner side of the optical component (window) 7 and a reflective surface of the optical component (mirror) 11. As a result, there is a possibility that the optical performance (for example, transmittance and reflectance) of the optical component (window) 7 and the optical component (mirror) 11 deteriorates. The removal method and the like will be described later.

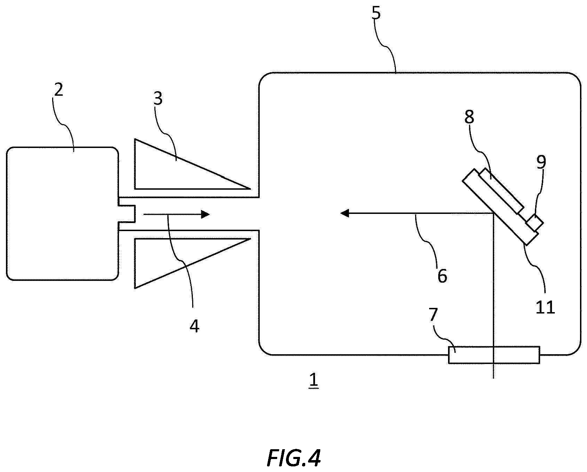

FIG. 4 illustrates the fourth example of the optical apparatus 1. The optical apparatus 1 of this example further includes the heater 8 and the temperature sensor 9 in addition to the optical apparatus 1 of FIG. 3. As described later, the alkaline earth metal atoms such as strontium in the optical component (window) 7 and the optical component (mirror) 11 can be easily removed using the heater 8 and the like.

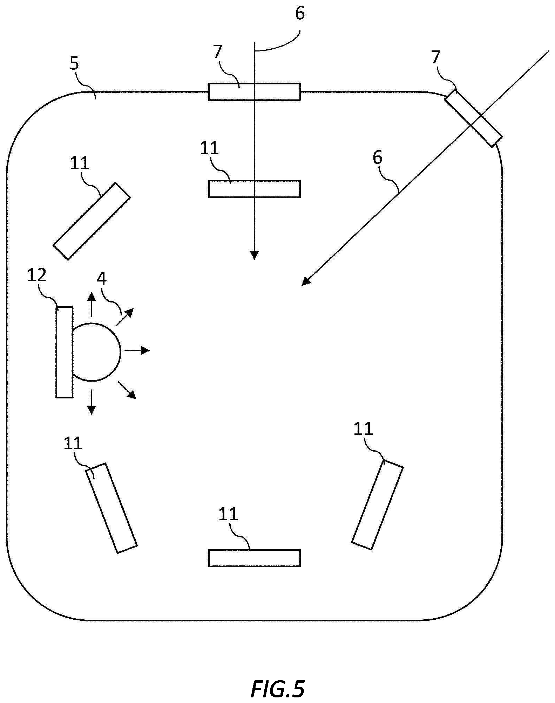

FIG. 5 illustrates the fifth example of the optical apparatus 1. The optical apparatus 1 of this example is an atom trap apparatus that traps the atom using a magneto-optical trap technique or an optical dipole trap technique. In the optical apparatus 1 of this example, the laser beam 6 introduced from the optical component (window) 7 is irradiated, using the optical component (mirror) 11, to the atom released from a dispenser atomic source 12. In this example, alkaline earth metal vapor such as strontium collides with the optical component (window) 7 and the optical component (mirror) 11, and atoms thereof are deposited on surfaces of these optical components. As a result, optical performance (e.g., transmittance and reflectance) deteriorates.

Next, an optical lattice clock will be described as an example of an apparatus in which the optical component according to the present embodiment is used. The optical lattice clock is a high-precision atomic clock proposed in 2001 by Hidetoshi Katori, one of the inventors of the present application. In the optical lattice clock, ultracold atoms are confined in an optical lattice potential formed by counter-propagating laser beams, and a clock transition frequency of the atoms is measured. With the optical lattice clock, time can be measured with a fractional uncertainty on the order of 10-18, which significantly exceeds the accuracy of conventional cesium atomic clocks.

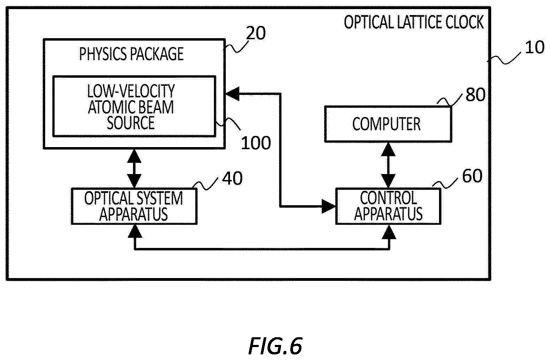

FIG. 6 illustrates an example of the configuration of the optical lattice clock. An optical lattice clock 10 includes, for example, the physics package 20, the optical system apparatus 40, the control apparatus 60, and the computer 80.

The physics package 20 is an apparatus that traps atoms from a low-velocity atomic beam, confines the atoms in an optical lattice, and interrogates a clock transition. The physics package 20 includes a low-velocity atomic beam source 100 configured to generate the low-velocity atomic beam.

The optical system apparatus 40 includes optical devices such as a laser source for atom cooling and trapping, a laser source for exciting a clock transition, and a laser frequency control system. The optical system apparatus 40 delivers laser beams to the physics package 20. Further, the optical system apparatus 40 receives fluorescence emitted by atoms in the physical package 20 and converts the fluorescence into an electrical signal using a photodetector. The optical system apparatus 40 performs feedback control of a frequency of the laser source based on the detected signal so as to match a clock transition frequency of the atoms.

The control apparatus 60 controls the physics package 20 and the optical system apparatus 40. The control apparatus 60 performs operations such as controlling the operation of the physics package 20 and the optical system apparatus 40, and processing measurement data including frequency analysis of clock transitions. The control apparatus 60 further processes detected signals to determine the clock transition frequency and provides feedback signals for stabilizing the optical system. The functions of the optical lattice clock 10 are implemented through coordinated operation of the physics package 20, the optical system apparatus 40, and the control apparatus 60.

The computer 80 may be a general-purpose computer including the processor and the memory. The functions of the computer 80 are implemented by software being executed by hardware including the processor and the memory. Software for controlling and monitoring the optical lattice clock 10 may be installed on the computer 80. In addition to/alternatively, the computer 80 may be a dedicated computer designed exclusively for applications of the optical lattice clock, or may be dedicated hardware implemented by one or more dedicated circuit.

The computer 80 may be connected to the control apparatus 60, and may control not only the control apparatus 60 but also the entirety of the optical lattice clock 10 including the physics package 20 and the optical system apparatus 40. The computer 80 also provides the UI (User Interface) of the optical lattice clock 10. A user can perform startup of the optical lattice clock 10, time measurement, confirmation of results, and the like via the computer 80.

The computer 80 may be a computer such as the personal computer, the tablet computer, the smartphone, the workstation, the server computer, or the general-purpose computer, or may be a computer system in which a plurality of computers are connected.

The computer 80 may be implemented by one apparatus, or may be implemented by a plurality of apparatuses having shared roles. For example, the computer 80 may be the server-client system, and may provide a cloud service to a user who uses the method of the present embodiment. The computer may function as the computer 80 by executing the program.

The system including the physics package 20 and the configurations required for control of the physics package 20 may be referred to as the "physics package system". The configurations required for control may be included in the control apparatus 60 or the computer 80, or may be included in the physics package 20. Also, some or all of the functions of the control apparatus 60 may be included in the physics package 20.

Next, the low-velocity atomic beam source 100 will be described.

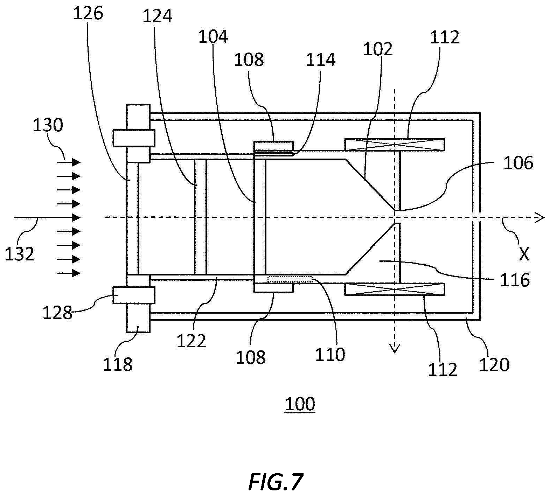

FIG. 7 is an example of the configuration of the low-velocity atomic beam source 100. The axis parallel to the longitudinal direction of the low-velocity atomic beam source 100 is defined as an X axis. The low-velocity atomic beam source 100 includes the high-temperature portion and the room-temperature portion.

The high-temperature portion includes the concave conical mirror 102 having an apex angle of 90 degrees, the optical window 104, an opening 106, the heater 108, a sample 110, a magnetic field generation apparatus 112, a temperature sensor 114, and a thermal reservoir 116. The room-temperature portion includes the flange 118, the thermal radiation shield 120, the heat-insulating support rod 122, the cold filter window 124, the vacuum-resistant window 126, and the vacuum-resistant electrical connector 128.

The thermal reservoir 116 has the axisymmetric shape with respect to the X axis. The thermal reservoir 116 may have, for example, a shape that is 2n-fold (n is an integer of 2 or more) axisymmetric with respect to the X axis. As an example, the thermal reservoir 116 may have the cylindrical shape.

The thermal reservoir 116 includes the sample 110 serving as an atomic source, the optical window 104 provided at one end and allowing laser beam to pass therethrough, and the concave conical mirror 102 having an apex angle of 90 degrees provided at another end. The axially symmetric space with respect to the X axis is formed inside the thermal reservoir 116, and the concave conical mirror 102 having an apex angle of 90 degrees is provided on an inner surface thereof so as to face the optical window 104 provided at the one end.

When the thermal reservoir 116 has a shape having fourfold rotational symmetry with respect to the X axis, the right square pyramid mirror is provided instead of the concave conical mirror 102 having an apex angle of 90 degrees. The concave conical mirror 102 having an apex angle of 90 degrees reflects the laser beam 130 incident from the optical window 104 into the space inside the thermal reservoir 116 toward the optical window 104.

The opening 106 is formed at the apex of the concave conical mirror 102 having an apex angle of 90 degrees. The opening 106 is the hole opened at the apex thereof. Since the apex is arranged on the X axis, the opening 106 is arranged on the X axis. As described later, the atomic beam is emitted from the opening 106 to the outside of the thermal reservoir 116.

The temperature sensor 114 is provided on a side surface of the thermal reservoir 116 and is configured to measure a temperature of the thermal reservoir 116. The temperature sensor 114 may be, for example, a thermocouple or a resistance temperature detector (RTD) using platinum. A heater 108 configured to heat the thermal reservoir 116 and the magnetic field generation apparatus 112 that generates a magnetic field are provided on an outer peripheral surface of the thermal reservoir 116.

The magnetic field generation apparatus 112 generates, inside the thermal reservoir 116, the magnetic field for capturing (trapping) atoms by using a magneto-optical trap (MOT) method. The magnetic field generation apparatus 112 may be provided on the outer peripheral surface of the thermal reservoir 116 and/or on an inner surface of the thermal radiation shield 120.

The magnetic field generation apparatus 112 is, for example, the coil. The coil is, for example, the anti-Helmholtz coil which has an axially symmetric shape with respect to the X axis and in which currents flow antisymmetrically with respect to a central axis thereof. In order to form a large gradient magnetic field, for example, it is necessary to wind a wire having the large diameter so as to allow the large current to flow, with a large number of turns. It is needless to mention that a coil other than the above may be used.

When the target temperature of the thermal reservoir 116 is 250°C or lower, a coated conductive wire such as a polymer coated copper wire can be used as a coil. In contrast, at higher temperatures, for example around 270°C, the polymer coating cannot withstand the temperature, and an uncoated conductive wire is required. For example, the bobbin made of alumina ceramic or the like is used, grooves are formed in the bobbin so that adjacent copper wires do not contact each other, and the copper wire is wound around the bobbin using the grooves as guides.

As another example, the magnetic field generation apparatus 112 may be the permanent magnet. The permanent magnet is, for example, the pair of permanent magnets having an axially symmetric ring shape and magnetized antisymmetrically with respect to a central axis thereof. As another example, the permanent magnet may be the permanent magnet having an axially symmetric cylindrical shape covering the thermal reservoir 116 and magnetized in a radial direction.

The magnetic field generation apparatus 112 may be the permanent magnet having a Curie temperature sufficiently higher than the target temperature. For example, the magnetic field generation apparatus 112 may be the samarium-cobalt magnet, the AlNiCo magnet, the strontium ceramic magnet, or the like.

The magnetic field generation apparatus 112 forms the quadrupole magnetic field distribution suitable for the concave conical mirror 102 having an apex angle of 90 degrees. When the right square pyramid mirror is used instead of the concave conical mirror 102 having an apex angle of 90 degrees, two pairs of anti-Helmholtz coils arranged apart from each other in the direction perpendicular to the central axis, or four pieces of permanent magnets, which form a two-dimensional quadrupole magnetic field distribution, are used as the magnetic field generation apparatus 112.

As another example, the magnetic field generation apparatus 112 may be 2n-fold (n is an integer of 2 or more) pieces of rectangular or saddle-shaped coils having the same shape, which are provided on the side surface (on the outer peripheral surface of the thermal reservoir 116) surrounding a 2n-fold (n is an integer of 2 or more) rotational symmetry axis of the thermal reservoir 116. For example, the control apparatus 60 causes the two-dimensional quadrupole magnetic field to be generated from the magnetic field generation apparatus 112 by causing currents of coils facing each other across the 2n-fold rotational symmetry axis to flow in mutually opposite directions.

As still another example, the magnetic field generation apparatus 112 may be 2n-fold pieces of permanent magnets having the same shape, which are provided on a side surface (on the outer peripheral surface of the thermal reservoir 116) surrounding the 2n-fold rotational symmetry axis of the thermal reservoir 116, the 2n-fold pieces of permanent magnets being quadrangular prism-shaped or arc-column-shaped permanent magnets (columnar permanent magnets having a cross section with the quadrangular shape or the arc shape). The permanent magnets are magnetized in the angular direction with respect to the symmetry axis (the circumferential direction around the symmetry axis). Further, magnetization directions of permanent magnets facing each other across the 2n-fold rotational symmetry axis are opposite to each other. Thereby, the quadrupole magnetic field is formed.

The heater 108 heats the thermal reservoir 116 such that the thermal reservoir 116 reaches the target temperature. For example, the heater 108 heats a part or entirety of the thermal reservoir 116. As a result of heating, the atomic source is vaporized, thereby generating an atomic vapor that is released into an internal space of the thermal reservoir 116.

Heating by the heater 108 can prevent the atomic vapor from condensing upon collision with the optical window 104, an inner wall of the thermal reservoir 116, or the like. The atomic source can be vaporized not only by the heater 108 but also by laser ablation.

The heater 108 may be provided in the vicinity of the concave conical mirror 102 having an apex angle of 90 degrees (for example, on the back side of the concave conical mirror 102 having an apex angle of 90 degrees) instead of, or in addition to, a position shown in Fig. 7. Thereby, in the method of removing the alkaline earth metal atoms described later, it is possible to efficiently heat only the concave conical mirror 102 having an apex angle of 90 degrees portion.

The sample 110 containing the atomic source is placed in a recess provided on a side surface of the inner wall of the thermal reservoir 116. The sample 110 may be taken in and out through the opening 106, or the sample 110 may be taken in and out by disassembling the low-velocity atomic beam source 100 and removing the optical window 104. The sample 110 may be an alkaline earth metal, such as strontium.

As a material of the thermal reservoir 116, a material is used with which the thermal reservoir 116 does not chemically react with the atomic gas and does not form an alloy with the atomic gas at the target temperature. The temperature of the thermal reservoir 116 is set such that the saturated vapor pressure of the sample 110 becomes sufficiently larger than the pressure in the vacuum environment in which the sample 110 is placed, and the saturated vapor pressure of a heated portion such as the thermal reservoir 116 becomes sufficiently smaller. For example, when the atomic source is strontium, the target temperature of the thermal reservoir 116 is set to 270°C or higher.

The concave conical mirror 102 having an apex angle of 90 degrees reflects the laser beam 130. Details such as the material of the concave conical mirror 102 having an apex angle of 90 degrees will be described later.

The thermal reservoir 116 may be formed of a material that has a low vapor pressure and exhibits low outgassing under ultra-high vacuum conditions when heated to the target temperature. The material of the thermal reservoir 116 is, for example, aluminum, the metal coated with aluminum, the insulator coated with aluminum, silver, the metal coated with silver, the insulator coated with silver, SUS (stainless steel), or glass coated with an optical multilayer film, and the like. The insulator is, for example, ceramic (for example, high-purity alumina or the like) or glass.

The thermal reservoir 116 and the concave conical mirror 102 may be formed of the same material or of different materials. For example, when the concave conical mirror 102 is integrally formed with the thermal reservoir 116, a portion of the thermal reservoir 116 may be mechanically polished to form a mirror surface that functions as the concave conical mirror 102.

As the material of the optical window 104, the material (for example, sapphire) that maintains transmissivity at a target temperature is used. An optical coating (for example, the antireflection coating) that can maintain transmittance at a target temperature may be formed on the optical window 104 formed of a sapphire substrate. For example, by using an electron beam evaporation method, the dielectric multilayer coating 520 described later (as an example, a titanium oxide/silica-based multilayer coating) may be formed on the optical window 104. Furthermore, the aluminum oxide layer 530 described later may be provided on the dielectric multilayer coating 520.

The thermal radiation shield 120 is installed to prevent thermal radiation to the components arranged around the low-velocity atomic beam source 100. The thermal radiation shield 120 is provided so as to cover a part or all of the heater 108, the magnetic field generation apparatus 112, and the thermal reservoir 116. The heater 108, the magnetic field generation apparatus 112, and the thermal reservoir 116 may be arranged in the space enclosed by the thermal radiation shield 120.

For example, the material (for example, mirror-finished aluminum or mirror-finished stainless steel) having a low surface emissivity is used for the thermal radiation shield 120. A plurality of thermal radiation shields 120 may be stacked. For example, when a two-layer structure is used, the outer layer may be formed of a material the outer layer may be formed of a material having high magnetic permeability such as permalloy, the thermal radiation shield can also serve as the electromagnetic shield.

On the X axis, the optical window 104, the cold filter window 124, and the vacuum-resistant window 126 are arranged in this order. The optical window 104 is provided at one end of the thermal reservoir 116 so as to face the concave conical mirror 102 having an apex angle of 90 degrees.

The material of the vacuum-resistant window 126 is, for example, the Pyrex (registered trademark) glass, quartz glass, or the like. **In** addition, the optical coating such as an antireflection coating that can maintain transmittance may be applied to a surface of the vacuum-resistant window 126.

The cold filter window 124 is disposed on an optical path of laser light incident on the optical window 104 between the optical window 104 and the vacuum-resistant window 126, and reduces heat transfer from the optical window 104 to the vacuum-resistant window 126. The material of the cold filter window 124 may be, for example, the same material as the vacuum-resistant window 126.

The heat-insulating support rod 122 is provided from the thermal reservoir 116 to the flange 118. As the material of the heat-insulating support rod 122, a material having low thermal conductivity is used in order to reduce heat transfer from a high-temperature portion to a room-temperature portion, improve thermal efficiency of the heater in the high-temperature portion, and maintain stability of a temperature of the room-temperature portion. For example, magnesia, steatite ceramic, or the like is used as the material of the heat-insulating support rod 122.

The vacuum-resistant electrical connector 128 is the hermetic connector for transmitting and receiving electrical signals between the vacuum space and the atmospheric space. The vacuum-resistant electrical connector 128 is used, for example, for input and output of a signal of the temperature sensor 114, supply of current to the heater 108, supply of current to the magnetic field generation apparatus 112, and the like.

The flange 118 is the member for attaching the low-velocity atomic beam source 100 to the physics package 20. The physics package 20 includes the vacuum chamber, and the thermal reservoir 116 of the low-velocity atomic beam source 100 is used in an ultra-high vacuum environment, and an interior of the thermal reservoir 116 is maintained at an ultra-high vacuum. For that purpose, the flange 118 has the seal mechanism for sealing a vacuum, such as, for example, a metal gasket system. It should be noted that heat may be transferred from the high-temperature portion to the flange 118. To address this, the water-cooling mechanism may be provided in the flange 118.

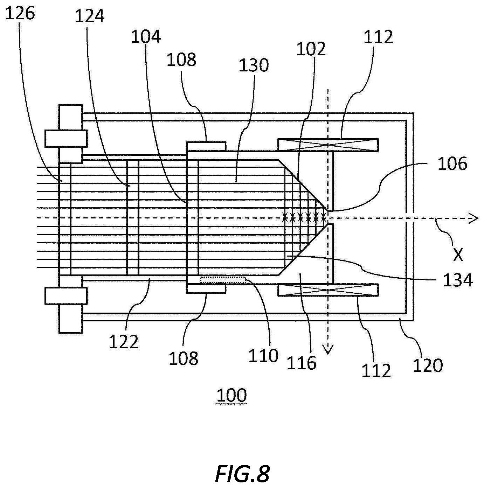

Hereinafter, the operation of the low-velocity atomic beam source 100 will be described with reference to FIG. 8.

FIG. 8 is an example of the configuration of the low-velocity atomic beam source 100. As illustrated in FIGS. 7 and 8, the laser beam 130 enters the low-velocity atomic beam source 100 from an outside of the low-velocity atomic beam source 100 by passing through the vacuum-resistant window 126. The laser beam 130 is circularly polarized (for example, σ+). The laser beam 130 that has entered the low-velocity atomic beam source 100 passes through the cold filter window 124 and the optical window 104, is reflected twice by the concave conical mirror 102 having an apex angle of 90 degrees in the thermal reservoir 116. The reflected laser beam 134 is circularly polarized in a direction opposite to that on the forward path (for example, σ-), passes through the optical window 104, the cold filter window 124, and the vacuum-resistant window 126, and is emitted outside the low-velocity atomic beam source 100.

The gradient magnetic field is formed in an internal space of the thermal reservoir 116 by the magnetic field generation apparatus 112. For example, the uniform gradient magnetic field is formed on an X axis. The trapping space for trapping the atom is formed inside the thermal reservoir 116 by the reflected laser beam 134 and the magnetic field formed by the magnetic field generation apparatus 112, whereby the magneto-optical trap (MOT) for trapping the atom is realized.

Heating of the thermal reservoir 116 by the heater 108 causes atoms to be vaporized from the atomic source and released into the thermal reservoir 116. The atomic vapor is trapped and cooled within the thermal reservoir 116 using a magneto-optical trap.

As illustrated in FIGS. 7 and 8, laser beam 132 enters the low-velocity atomic beam source 100 from an outside of the low-velocity atomic beam source 100 along the X axis by passing through the vacuum-resistant window 126. The laser beam 132 is beam that pushes atoms, which are trapped and cooled by using the magneto-optical trap in the thermal reservoir 116 out of the thermal reservoir 116 through the opening 106, thereby forming a low-velocity atomic beam. **In** addition, the opening is formed on the X axis in the thermal radiation shield 120, and the low-velocity atomic beam emitted from the thermal reservoir 116 passes through the opening and is emitted to an outside of the thermal radiation shield 120 from the opening formed in the thermal radiation shield 120.

According to the low-velocity atomic beam source 100, in addition to the sample 110, the entirety of the thermal reservoir 116 including the optical window 104 is heated. Therefore, even for the elements which have a low saturated vapor pressure at room temperature and from which sufficient atomic vapor cannot be obtained, sufficient atomic gas can be obtained by increasing the saturated vapor pressure through heating. Furthermore, the low-velocity atomic beam source 100 can generate a high-flux cold atomic beam using a magneto-optical trap. As elements having a low saturated vapor pressure at room temperature, elements other than strontium may be used. For example, another alkaline earth metal element or ytterbium may be used as the atomic source.

In the magneto-optical trap, it is desirable that the magnetic field gradient is strong and spatially uniform so that a cold atom cloud be trapped over as wide a region as possible where laser beams reflected by the concave conical mirror 102 having an apex angle of 90 degrees intersect. Therefore, in a case where a permanent magnet is used as the magnetic field generation apparatus 112, it is preferable to use the cylindrical magnet that surrounds the thermal reservoir 116, the cylindrical magnet having an axial length longer than the inner diameter of the cylinder and being magnetized in a radial direction. In a case where a coil is used as the magnetic field generation apparatus 112, it is preferable to use a coil configuration that generates an antisymmetric current distribution about a coil center is preferably used, such as a tetra-coil configuration including four current paths or a configuration including six or more current paths.

Regarding downsizing of the low-velocity atomic beam source, the length of the heat-insulating support rod 122 , which primarily serves as a heat conduction path between a high-temperature portion and a room-temperature portion is an important parameter. As the material of the heat-insulating support rod 122, magnesia (MgO) is suitable in consideration of its low outgassing in the UHV environment. The number of the heat-insulating support rods 122 is preferably three from a viewpoint of heat dissipation. It is needless to mention that this number is merely an example, and the number may be other than three.

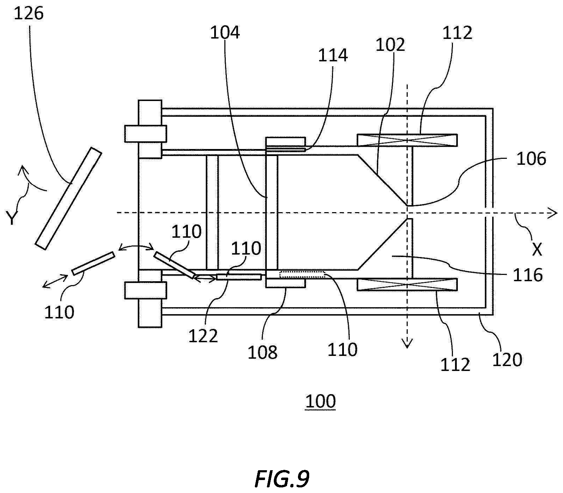

FIG. 9 is an example of the configuration of the low-velocity atomic beam source 100. With reference to FIG. 9, a process for loading and unloading the sample 110 will be described.

The sample 110 may be accessible from near the outer periphery of the optical window 104. For example, as indicated by symbol Y, the vacuum-resistant window 126 is detachably mounted on the low-velocity atomic beam source 100. By removing the vacuum-resistant window 126, the sample 110 can be unloaded from a recess provided on a side surface of the thermal reservoir 116 using a jig. In addition, by removing the vacuum-resistant window 126, the sample 110 can be taken into the low-velocity atomic beam source 100 and placed in the recess using the jig.

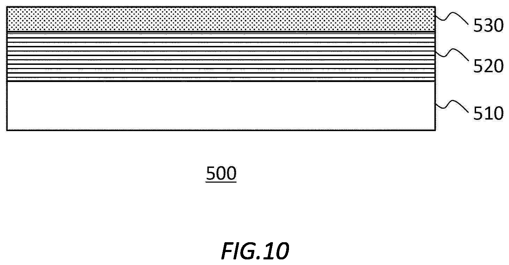

FIG. 10 schematically illustrates an example of the layer configuration of the optical component 500 according to the present embodiment. The optical component 500 is used in an environment in which at least a part thereof is exposed to the alkaline earth metal vapor. The optical component 500 may have one or more functions of a mirror, a lens, a prism, a window, a wave plate, and a polarizer.

For example, the optical component 500 may be the optical component (window) 7 and/or the optical component (mirror) 11 of the optical apparatus 1 (i.e., the laser cooling apparatus or the atom trap apparatus) according to FIGS. 1 to 5. The optical component 500 may further be used under the high-temperature environment (for example, 200°C or higher). For example, the optical component 500 may be the concave conical mirror 102 having an apex angle of 90 degrees of the low-velocity atomic beam source 100 according to FIG. 7. In a case where the optical component 500 is used under the high-temperature environment (for example, 200°C or higher), the optical component 500 suppresses deposition of the alkaline earth metal vapor.

The optical component 500 has the layer structure illustrated in FIG. 10. The optical component 500 includes the substrate 510, the dielectric multilayer coating 520, and the aluminum oxide layer 530.

The substrate 510 provides the basic structure and mechanical strength to the optical component 500. The substrate 510 may also provide the basic optical functions such as reflection, transmission, or phase shift to the optical component 500. In a case where the dielectric multilayer coating 520 exhibits sufficient optical functions, the substrate 510 does not need to have the optical function.

The substrate 510 may be formed of aluminum oxide (sapphire), silicon oxide (quartz), glass, or metal. In a case where the optical component 500 is the optical component (mirror) 11 or the concave conical mirror 102 having an apex angle of 90 degrees, the substrate 510 may be the aluminum oxide substrate having higher thermal conductivity than other materials.

The substrate 510 serves as the structural foundation of the optical component 500, and does not necessarily need to be plate-shaped. The substrate 510 may have an arbitrary shape in accordance with the shape of the optical component 500. For example, in a case where the optical component 500 is the optical component (window) 7 and/or the optical component (mirror) 11 of FIGS. 1 to 5, the substrate 510 is the flat plate. For example, in a case where the optical component 500 is the concave conical mirror 102 having an apex angle of 90 degrees, the substrate 510 has the cylindrical shape including a conical cutout, as illustrated in FIG. 7 and the like. The optical component 500 may not include the substrate 510.

The surface roughness of the surface on the substrate 510 facing the optical path may be sufficiently small with respect to the wavelength of incident light (for example, the laser beam 6 or the laser beam 130). For example, the surface of the substrate 510 facing the optical path may be polished.

A thickness of the substrate 510 may be 0.1 to 8.0 mm, preferably 1.0 to 3.0 mm. When the thickness is equal to or greater than the certain value, sufficient mechanical strength of the optical component 500 is ensured. When the thickness is not excessively large, thermal expansion of the optical component 500 during the heating step can be suppressed.

The dielectric multilayer coating 520 provides the optical function to the optical component 500. The dielectric multilayer coating 520 is formed on the substrate 510. For example, the dielectric multilayer coating 520 may have a function of reflecting, by interference, the laser beam 130 used in the low-velocity atomic beam source 100, the laser beam 6 used in the optical apparatus 1, or the like. **In** this case, the optical component 500 has the function as a mirror (for example, the optical component (mirror) 11 and the concave conical mirror 102 having an apex angle of 90 degrees).

Instead of this, the dielectric multilayer coating 520 may have the antireflection function. **In** this case, the optical component 500 may have a function as the window provided with an antireflection coating (for example, the optical component (window) 7 and the optical window 104), the lens, and/or the prism. Instead of these, the dielectric multilayer coating 520 may have the phase shift function or the polarization function. **In** this case, the optical component 500 may be the wave plate or the polarizer.

The dielectric multilayer coating 520 is arranged at least on portions of the optical component 500 located in an optical path. For example, the dielectric multilayer coating 520 is provided at least on portions of the optical component (mirror) 11 located in the optical path (for example, the portion irradiated with the laser beam 6). For example, the dielectric multilayer coating 520 is provided at least on the portions of the concave conical mirror 102 located in the optical path (for example, the portion irradiated with the laser beam 130). The dielectric multilayer coating 520 may be provided on the entire reflection surface of the optical component (mirror) 11 and the concave conical mirror 102 having an apex angle of 90 degrees.

The dielectric multilayer coating 520 is formed by stacking the plurality of dielectric layers. For example, the dielectric multilayer coating 520 may be formed by alternately stacking the high refractive index layer that is transparent (for example, having a transmittance of 90% or more) with respect to target wavelength (for example, the laser beam 6 or the laser beam 130), and the low refractive index layer that is transparent (for example, having a transmittance of 90% or more) with respect to target wavelength (for example, the laser beam 6 or the laser beam 130) and has a refractive index lower than that of the high refractive index layer.

The dielectric multilayer coating 520 may include 5 to 200 layers. For example, the dielectric multilayer coating 520 may include approximately 50 to 100 layers of alternating high-refractive-index layers and low-refractive-index layers. In this manner, the dielectric multilayer coating 520 can achieve excellent optical performance (for example, a high reflectance or a high transmittance) by including a plurality of layers having different refractive indices. For example, the dielectric multilayer coating 520 can achieve a reflectance close to 100%.

For example, each of the high refractive index layers and the low refractive index layers may have a thickness selected to achieve a desired optical function of the dielectric multilayer coating 520. When the optical component 500 is the optical component (mirror) 11 or the concave conical mirror 102 having an apex angle of 90 degrees, each of the high refractive index layers and the low refractive index layers may have a thickness configured to reflect the laser beam 6 or the laser beam 130 by multiple-beam interference. For example, when the optical component 500 is the antireflection film, each of the high refractive index layers and the low refractive index layers may have a thickness configured to cancel reflection of the laser beam 6 or the laser beam 130 by multiple-beam interference.

The high refractive index layer may be formed of a material selected from tantalum oxide, including tantalum pentoxide, titanium oxide, including titanium dioxide, zirconium dioxide, zinc selenide, and hafnium oxide. The low refractive index layer may be formed of the material selected from silicon dioxide and magnesium fluoride.

In the dielectric multilayer coating 520, the layer in contact with the aluminum oxide layer 530 is preferably tantalum oxide, particularly tantalum pentoxide (high refractive index layer). Since tantalum pentoxide has a relatively small lattice mismatch with aluminum oxide, distortion and the like are less likely to occur in the subsequent heating step.

The dielectric multilayer coating 520 may include three or more types of the layers. For example, the dielectric multilayer coating 520 may be a stack in which the high refractive index layer, the low refractive index layer, and the intermediate refractive index layer (a layer having a refractive index intermediate between the high refractive index layer and the low refractive index layer) are regularly arranged.

The dielectric multilayer coating 520 can be formed by the physical vapor deposition method such as vacuum deposition, sputtering, or the ion plating method. For example, the dielectric multilayer coating 520 may be formed by the electron beam evaporation.

The aluminum oxide layer 530 protects the surface of the optical component 500 that is exposed to an alkaline earth metal vapor. For example, in the optical component 500 used in an environment in which the optical component 500 is exposed to the alkaline earth metal vapor, such as the optical component (window) 7 and the optical component (mirror) 11 of the optical apparatus 1, the alkaline earth metal vapor collides with the surface, and with continued use, alkaline earth metal atoms are deposited on the surface, causing optical performance such as reflectance to gradually deteriorate. To deal with this, by forming the aluminum oxide layer 530, resistance to the alkaline earth metal vapor is improved, and furthermore the alkaline earth metal atoms deposited on the surface of the optical component 500 can be easily removed by the method described later.

In the optical component 500 used in an environment in which the optical component 500 is exposed to the alkaline earth metal vapor, such as the concave conical mirror 102 having an apex angle of 90 degrees and the optical window 104 of the low-velocity atomic beam source 100, the high-temperature alkaline earth metal vapor collides with the surface thereof, and chemically reduces the surface of the optical component 500, or chemically reacts with the surface of the optical component 500, or diffuses into the interior of the optical component 500, which may result in gradual degradation of optical performance, such as reflectance and transmittance. To deal with this, by forming the aluminum oxide layer 530, resistance to the alkaline earth metal vapor can be improved, and such optical performance degradation can be suppressed .

The aluminum oxide layer 530 is known to have low chemical reactivity with respect to the alkaline earth metal vapor. Therefore, by providing the aluminum oxide layer 530 on the surface of the optical component 500, alkaline earth metal atoms can be more easily removed in the heating step described later by sublimation, as compared with a case in which the aluminum oxide layer 530 is not provided. By using the aluminum oxide layer 530, optical influence on the dielectric multilayer coating 520 can be minimized, thereby allowing the dielectric multilayer coating 520 to maintain its excellent optical performance, such as high reflectance or high transmittance.

The aluminum oxide layer 530 is arranged at least on a portion of the optical component 500 located in an optical path. For example, the aluminum oxide layer 530 is provided on at least a portion of the optical component (window) 7 and the optical component (mirror) 11 that is irradiated with the laser beam 6, or on at least a portion of the concave conical mirror 102 that is irradiated with the laser beam 130.

The aluminum oxide layer 530 may be provided over an entire surface of the optical component 500 (for example, the optical component (window) 7, the optical component (mirror) 11, and/or the concave conical mirror 102 having an apex angle of 90 degrees) that is exposed to an alkaline earth metal vapor. The aluminum oxide layer 530 may be provided only on portions of the optical component 500 (for example, the optical component (window) 7, the optical component (mirror) 11, and/or the concave conical mirror 102 having an apex angle of 90 degrees) that are located in an optical path among surfaces exposed to the alkaline earth metal vapor, and may not be provided on other portions.

As described above, the aluminum oxide layer 530 covers the outermost surface of the optical component 500 on a side exposed to the alkaline earth metal vapor. As a result, during use of the optical component 500 in the environment where alkaline earth metal vapor is present, alkaline earth metal atoms are deposited on the surface of the aluminum oxide layer 530.

The aluminum oxide layer 530 may have any thickness within the range without impairing functions of the dielectric multilayer coating 520 and the like. For example, the aluminum oxide layer 530 may have the thickness of 50 to 150 nm, preferably 70 to 130 nm.

If the aluminum oxide layer 530 is too thin, protective performance may be insufficient, whereas if the aluminum oxide layer 530 is too thick, optical absorption by the aluminum oxide layer 530 may adversely affect optical performance of the optical component 500. Once the aluminum oxide layer 530 is provided on the outermost surface of the optical component 500 with a thickness above a certain level, desired performance can be exhibited, and the thickness is not particularly limited.

The aluminum oxide layer 530 may have a uniform thickness. This thereby reduces the likelihood that the aluminum oxide layer 530 adversely affects optical performance of the optical component 500.

The aluminum oxide layer 530 may be formed by the physical vapor deposition method such as vacuum deposition, sputtering, or the ion plating method. For example, the aluminum oxide layer 530 may be formed by the ion beam sputtering.

The layer configuration of the optical component 500 is not limited to the layer configuration illustrated in FIG. 10. If necessary, in addition to the above configuration, additional layers may further be provided.

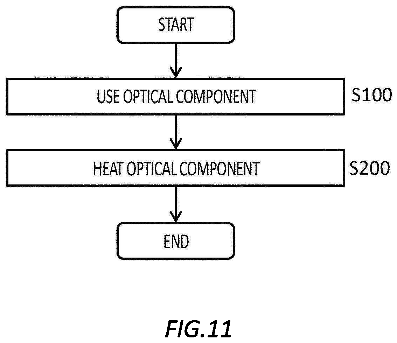

FIG. 11 illustrates an example of the flow of the method for removing alkaline earth metal atoms deposited on the optical component 500 according to the present embodiment. The alkaline earth metal atoms deposited on the optical component can be removed by performing processes of S100 to S200.

First, in S100, the optical component 500 is used in an environment in which at least a part of the optical component 500 is exposed to the alkaline earth metal vapor. For example, the optical apparatus 1 or the like according to FIGS. 1 to 5 including the optical component (window) 7 and the optical component (mirror) 11 as the optical component 500 may be used.

The alkaline earth metal vapor is not particularly limited, but may include an element having a low vapor pressure at room temperature (25°C), for example, an element for which a temperature at which the vapor pressure reaches 10⁻⁵ Pa is 250°C or higher, and as an example, the alkaline earth metal vapor may contain strontium atoms.

The optical component 500 may be used in the environment at a pressure lower than 1 atm (for example, 10² Pa or less, preferably 10⁻¹ Pa or less, more preferably 10⁻⁵ Pa or less).

In the optical apparatus 1, alkaline earth metal atoms are used as the atoms 4. During operation, the alkaline earth metal vapor is continuously generated in the vacuum chamber 5. As this process continues, some of the alkaline earth metal atoms are deposited on the aluminum oxide layer 530 of the optical component 500 used as the optical component (window) 7 and/or the optical component (mirror) 11.

When a large amount of the alkaline earth metal atoms is deposited on the optical component 500, optical performance of the optical component 500 deteriorates. For example, the reflectance of the optical component (window) 7, the optical component (mirror) 11, and/or the concave conical mirror 102 having an apex angle of 90 degrees decreases.

The pretreatment for removing residual oxygen from a vacuum environment may be performed before S100. For example, the entire thermal reservoir 116 may be heated at around 100°C. This prevents alkaline earth metal atoms such as strontium from being oxidized by residual oxygen.

Next, in S200, the heating step of heating the optical component is performed. Alkaline earth metal atoms such as strontium deposited on the optical component 500 sublime upon heating and can be easily removed from the aluminum oxide layer 530.

In the heating step, only the optical component 500 may be heated. In the heating step, the entire optical component 500 may be heated, or only a portion of the optical component located in an optical path may be heated. If the alkaline earth metal atoms on the portions located in the optical path can be removed, the optical performance of the optical component 500 is improved, and selective heating of such portions can reduce energy and time consumption and can mitigate risks of thermal deterioration of the optical component 500 and the like.

For example, in the optical apparatus 1 according to FIGS. 2 and 4, the optical component 500 used as the optical component (window) 7 and/or the optical component (mirror) 11 may be heated using the heater 8. In the low-velocity atomic beam source 100, deposition of alkaline earth metal atoms is relatively unlikely to occur because the high temperature is maintained, but deposition can be further suppressed by providing the aluminum oxide layer 530 on the optical component 500. As described above, by using the optical component according to the present embodiment in the high-temperature environment (for example, 200°C or higher) in which at least a part of the optical component is exposed to alkaline earth metal vapor, deposition of alkaline earth metal atoms on the optical component while the optical component can be prevented during operation.

Instead of this, the entire environment including the optical component 500 (for example, the vacuum chamber 5 including the optical component (window) 7 and/or the optical component (mirror) 11, etc.) may be heated. This makes it possible to remove alkaline earth metal atoms from the entire environment including the optical component 500.

The heating step may be performed under a condition in which a vapor pressure of the alkaline earth metal atoms exceeds a pressure of the environment in which the optical component 500 is arranged. For example, the optical component 500 may be placed in the environment at a pressure lower than 1 atm (for example, 10² Pa or less, preferably 10⁻¹ Pa or less, more preferably 10⁻⁵ Pa or less) and heated to a temperature at which the alkaline earth metal atoms sublime.

The heating step may be performed under a condition in which the vapor pressure of the alkaline earth metal is 0.8 times or more, preferably equal to or greater, more preferably 2 times or greater than the pressure of the environment. The maximum temperature in the heating step to be executed may be 500°C or less. For example, the heating step may be performed such that the maximum temperature is 200°C or higher, preferably 250 to 500°C, more preferably 280 to 420°C, and further preferably 300 to 400°C.

By heating to the temperature equal to or higher than a certain temperature in vacuum, the alkaline earth metal deposited on the optical component 500 can be caused to sublime rapidly and be efficiently removed. On the other hand, if the heating temperature is too high, there is a possibility that the optical component 500 may be altered or that the optical performance may be adversely affected.

The heating step may include the temperature raising stage (i.e., heating) and the temperature lowering stage (i.e., cooling). Furthermore, the heating step may include the holding stage in which the temperature is kept substantially constant between the temperature raising stage and the temperature lowering stage.

In the temperature raising stage, the temperature may be raised at a constant temperature raising rate. For example, in the temperature raising stage, heating may be performed at the temperature raising rate of 10 to 200°C/hour, preferably 50 to 150°C/hour. In the temperature lowering stage, cooling may be performed at the constant temperature lowering rate. The temperature lowering rate may be slower than the temperature raising rate.

For example, the temperature lowering rate may be a rate corresponding to 20 to 80% of the temperature raising rate, preferably 30 to 70%, and more preferably 40 to 60%. As an example, the temperature raising rate may be +100°C/hour, and the temperature lowering rate may be -50°C/hour. For example, in the temperature lowering stage, cooling may be performed at the temperature lowering rate of -180 to -10°C/hour, preferably -100 to -40°C/hour.

The heating time in the heating step may be in the range of 1 to 30 hours, preferably 5 to 15 hours. If the time is too short, there is a possibility that removal of the alkaline earth metal becomes insufficient, and even if the time is too long, no substantial additional removal occurs because most of the alkaline earth metal has already been removed, resulting in increased inefficiency.

Here, the term "heating time" may be the time during which the temperature of the optical component 500 is higher than an ambient temperature. For example, the heating time may be the time from start of the temperature raising stage (heating) until completion of the temperature lowering stage (cooling). Instead of this, the heating time may be the time during which the temperature of the optical component 500 is maintained at the temperature (e.g., 200°C) or higher at which sublimation of the alkaline earth metal atom substantially occurs.

As described above, according to the present embodiment, by providing the aluminum oxide layer 530 on the surface of the optical component 500 in addition to the dielectric multilayer coating 520, the alkaline earth metal atoms deposited on the optical component 500 can be easily removed by heating.

After heating (removal of the alkaline earth metal atoms) in S200, S100 (use of the optical component 500) may be performed again. S100 and S200 may be alternately repeated. For example, the optical performance of the optical component 500 may be restored by performing cleaning by heating each time the optical component 500 is used a predetermined number of times/for a predetermined time.

For example, a cycle including use of the optical component 500 and the heating step may be repeated a predetermined number of times (e.g., 10 times or less, preferably 5 times or less). Thus, the optical component 500 can be used for an extended period while maintaining its optical performance through simple cleaning by heating. When a predetermined number of times is exceeded, the optical component 500 may be detached to perform more thorough cleaning requiring additional time and resources, or the optical component 500 may be replaced with the new one.

In a modification of the present embodiment, the optical component 500 may include the tantalum oxide layer (e.g., tantalum pentoxide) instead of/in addition to the aluminum oxide layer 530. Tantalum oxide, similarly to aluminum oxide, has the lattice constant greatly different from that of the alkaline earth metal and exhibits no reactivity with the alkaline earth metal atoms. On the other hand, the aluminum oxide layer is superior in laser resistance to the tantalum oxide layer.

In the above description, an example has been mainly described in which the optical component 500 of the present embodiment is applied to the optical component (window) 7 and/or the optical component (mirror) 11 of the optical apparatus 1 used as the laser cooling apparatus or the atom trap apparatus, and to the concave conical mirror 102 having an apex angle of 90 degrees of the low-velocity atomic beam source 100 of the optical lattice clock 10. The optical component of the present embodiment and the like is not limited thereto, and can be applied to various optical components used in the environment in which optical components are exposed to alkaline earth metal vapor. For example, the optical component described in the present embodiment can be applied as a mirror, a lens, a prism, a window, a wave plate, a polarizer, or the like in an atomic clock apparatus other than an optical lattice clock, an atom interferometer apparatus, a particle accelerator apparatus, a quantum computer, in the vacuum chamber, or the like.

Examples of the present embodiment and the like will be described below.

[Example] A 68-layer coating was formed on the optically polished surface of the sapphire substrate having a thickness of 2 mm. Layers 1 to 67 were formed by alternately depositing the high refractive index layer (Ta₂O₅) and the low refractive index layer (SiO₂) by an ion beam sputtering. The thicknesses of the high refractive index layer and the low refractive index layer were each set to 1/4 of the wavelength λ of laser beam to be used. The outermost layer (layer 68) was the aluminum oxide layer formed by ion beam sputtering.

The aluminum oxide layer was formed under the following conditions.
- Layer thickness: 85 nm (no phase shift)
- Target material: Al₂O₃
- Ion gun operating gas: Ar gas; purity 99.9999%; flow rate: 18 sccm
- Neutralizer gas for ion gun plasma neutralization: Ar gas; purity: 99.9999%; flow rate: 8 sccm
- Reactive gas introduced into the target: the O₂ gas; purity: 99.9999%; flow rate: 35 sccm
- Chamber internal temperature during deposition: 100°C

The spectral characteristics of the substrate after deposition were evaluated. The measured spectral characteristics were compared with simulated spectral characteristics obtained under the same deposition conditions, and based on the comparison results, the layer thickness of each layer of the dielectric multilayer coating was corrected, and deposition was performed again under the same conditions. The substrate formed with the corrected layer thickness is used as an evaluation substrate.

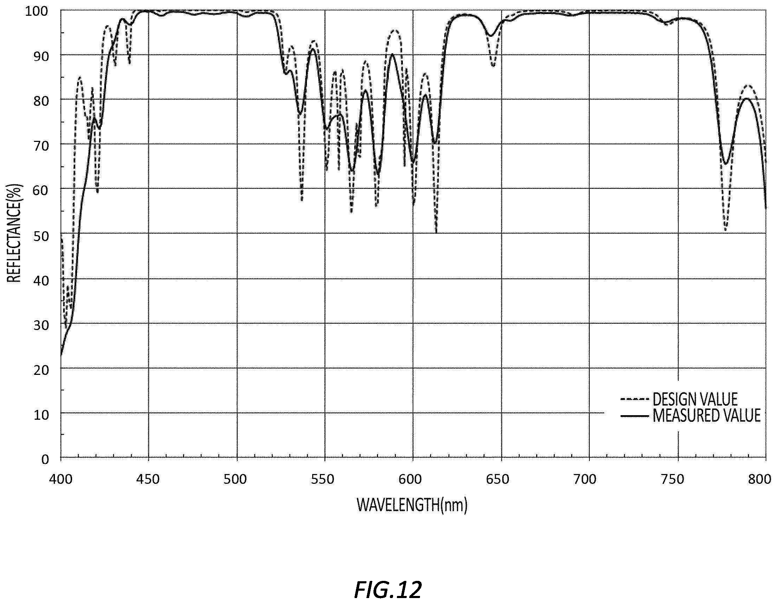

FIG. 12 illustrates a comparison between the spectral characteristics of the evaluation substrate and those obtained by simulation. The vertical axis of FIG. 12 indicates the reflectance (%), and the horizontal axis indicates the wavelength (nm). As illustrated in FIG. 12, the spectral characteristics (measured values in the drawing) of the evaluation substrate including the dielectric multilayer coating (layers 1 to 67) and the aluminum oxide layer (layer 68) substantially agree with the spectral characteristics by simulation (design values in the drawing).

The evaluation substrate was mounted as the optical component 11 illustrated in FIG. 4, and a change in reflectance of the optical component 11 was measured while strontium atoms 4 were emitted from the atomic oven 2.

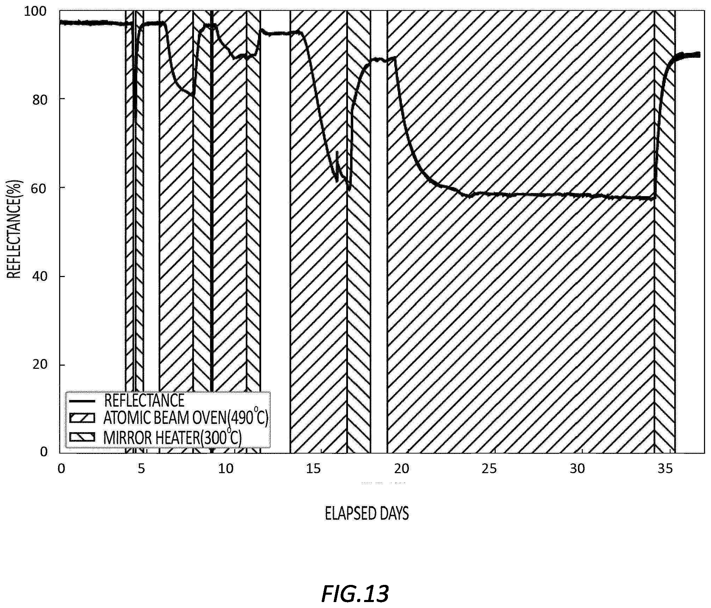

FIG. 13 shows the change over time in reflectance of the evaluation substrate. The vertical axis of FIG. 13 indicates reflectance (%), and the horizontal axis indicates elapsed time (elapsed days). The solid line indicates measured reflectance data. A region with forward-slash hatching indicates a period during which the atomic beam oven (set to 490°C) was in operation. A region with backward-slash hatching indicates a period during which the evaluation substrate was heated to 300°C by the mirror heater (heater 108).

As shown in FIG. 13, during a period in which the atomic beam oven was in operation, strontium atoms were deposited on the surface of the evaluation substrate and the reflectance decreased, but thereafter, when the mirror heater was operated, the reflectance rapidly recovered. This means that strontium atoms deposited on the surface of the evaluation substrate sublimed and were removed by heating with the mirror heater. As described above, according to the present embodiment, it is possible to rapidly and easily remove alkaline earth metal atoms deposited on the optical component used in an environment in which the optical component is exposed to the alkaline earth metal vapor.

Further, as shown in FIG. 13, when the heating step is repeatedly applied, recovery of the reflectance gradually becomes slower. However, it has been illustrated that the reflectance can be sufficiently recovered at least up to about five cycles.

While the embodiments of the present invention have been described above, the technical scope of the invention is not limited to the above described embodiments. It is apparent to persons skilled in the art that various alterations or improvements can be added to the above-described embodiments. Further, within the range that is not technically inconsistent, matters described for a specific embodiment can be applied to another embodiment. Further, each component may have features similar to those of the another component having the same name and a different reference sign. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

1: optical apparatus;
2: atomic oven;
3: laser cooling unit;
4: atom;
5: vacuum chamber;
6: laser beam;
7: optical component (window);
8: heater;
9: temperature sensor;
10: optical lattice clock;
11: optical component (mirror);
12: dispenser atomic source;
20: physics package;
40: optical system apparatus;
60: control apparatus;
80: computer;
100: low-velocity atomic beam source;
102: concave conical mirror;
104: optical window;
106: opening;
108: heater;
110: sample;
112: magnetic field generation apparatus;
116: thermal reservoir;
118: flange;
120: thermal radiation shield;
122: heat-insulating support rod;
124: cold filter window;
126: vacuum-resistant window;
128: vacuum-resistant electrical connector;
130: laser beam;
132: laser beam;
134: laser beam;
500: optical component;
510: substrate;
520: dielectric multilayer coating;
530: aluminum oxide layer.

## Claims

1. An optical component used in an environment in which at least a part of the optical component is exposed to an alkaline earth metal vapor, the optical component comprising:
at least a dielectric multilayer coating and an aluminum oxide layer provided on at least a portion of the optical component located in an optical path, wherein
an outermost surface of the optical component on a side exposed to the alkaline earth metal vapor is coated with the aluminum oxide layer.

2. The optical component according to claim 1, wherein
the optical component has one or more functions of a mirror, a lens, a prism, a window, a wave plate, and a polarizer.

3. The optical component according to claim 1 or 2, wherein
the alkaline earth metal vapor contains strontium atoms.

4. The optical component according to any one of claims 1 to 3, wherein
the aluminum oxide layer has a thickness of 50 to 150 nm.

5. The optical component according to any one of claims 1 to 4, wherein
the dielectric multilayer coating is formed by alternately stacking a transparent high refractive index layer and a transparent low refractive index layer having a refractive index lower than that of the high refractive index layer.

6. The optical component according to claim 5, wherein
the high refractive index layer is selected from tantalum oxide (e.g., tantalum pentoxide), titanium oxide (e.g., titanium dioxide), zirconium dioxide, zinc selenide, and hafnium oxide, and
the low refractive index layer is selected from silicon dioxide and magnesium fluoride.

7. The optical component according to any one of claims 1 to 6, comprising a substrate, wherein
the dielectric multilayer coating is formed on the substrate.

8. The optical component according to claim 7, wherein
the substrate is an aluminum oxide substrate.

9. The optical component according to any one of claims 1 to 8, wherein the optical component is used in an environment of less than 1 atm.

10. The optical component according to any one of claims 1 to 9, wherein the optical component is used in a high-temperature environment of 200°C or higher.

11. A low-velocity atomic beam source comprising the optical component according to any one of claims 1 to 10 as a mirror or a window.

12. A method of removing alkaline earth metal atoms deposited on an optical component according to any one of claims 1 to 10, the method comprising:
heating the optical component, after use in the environment, to a temperature of 200°C or higher to cause the alkaline earth metal atoms deposited on the optical component to sublime and be removed.

13. The method of removing the alkaline earth metal according to claim 12, wherein
the heating is performed in a range of 250 to 500°C.

14. The method of removing the alkaline earth metal according to claim 12 or 13, wherein
a heating time in the heating to be performed is in a range of 5 to 15 hours.

15. A method of preventing deposition of an alkaline earth metal on an optical component, the method comprising:
using the optical component in an environment of 200°C or higher to suppress deposition of the alkaline earth metal on the optical component according to any one of claims 1 to 10 during operation.
